# FASCICULE DE BREVET EUROPEEN

(11) **EP 1 133 842 B1**
(45) Date de publication et mention de la délivrance du brevet: **02.12.2009**
(21) Numéro de dépôt: 00966197.6
(22) Date de dépôt: 22.09.2000
(51) Int. Cl.: H04B 10/18

(54) **AMPLIFICATION POUR DES SYSTEMES DE TRANSMISSION A FIBRES OPTIQUES A TRES LARGE BANDE**
VERSTÄRKUNG FÜR FASEROPTISCHE BREITBANDIGE ÜBERTRAGUNGSSYSTEME
AMPLIFICATION FOR OPTICAL FIBRE ULTRAWIDE BAND TRANSMISSION SYSTEMS

(30) Priorité: 23.09.1999 FR 9911875
(43) Date de publication de la demande: 19.09.2001
(73) Titulaire: Alcatel Lucent, 75008 Paris (FR)
(72) Inventeur: HAMOIR, Dominique, F-91120 Montrouge (FR)
(74) Mandataire: Korakis-Ménager, Sophie
(86) Numéro de dépôt international: PCT/FR2000/002637
(87) Numéro de publication internationale: WO 2001/022626

(56) Documents cités:
- US-A- 5 847 862
- KANI J ET AL: "BIDIRECTIONAL TRANSMISSION TO SUPPRESS INTERWAVELENGTH-BAND NONLINEAR INTERACTIONS IN ULTRAWIDE-BAND WDM TRANSMISSION SYSTEMS" IEEE PHOTONICS TECHNOLOGY LETTERS,US,IEEE INC. NEW YORK, vol. 11, no. 3, mars 1999 (1999-03), pages 376-378, XP000823483 ISSN: 1041-1135
- ZOU X Y ET AL: "COMPENSATING OF NONUNIFORM GAIN INDUCED BY RAMAN SCATTERING AND EDFAS IN ULTRALONG-DISTANCE WDM LINKS" OPTICAL FIBER COMMUNICATION,US,NEW YORK, IEEE, 1995, pages 152-153, XP000517683 ISBN: 0-7803-2654-7

## Description

La présente invention concerne le domaine des transmissions optiques, et plus particulièrement les limitations provoquées par l'effet Raman dans les systèmes de transmission par fibres optiques. L'invention s'applique particulièrement aux systèmes de transmission à multiplexage en longueur d'onde.

Le multiplexage en longueur d'onde a rendu possible une augmentation considérable des capacités des systèmes de transmission par fibres optiques. Toutefois, l'effet Raman ou plus exactement la diaphonie due à l'effet Raman stimulé (SRS, acronyme de l'anglais "Stimulated Raman Scattering") constitue une limite importante; cet effet est par exemple décrit dans l'ouvrage G.P. Agrawal, Nonlinear Fibre Optics, Academic Press 1980, pour une bande de signal de largeur inférieure ou égale à 13 THz ,(440 cm⁻¹). Cet effet conduit à des transferts d'énergie entre les canaux. Pour un système de transmission à multiplexage en longueur d'onde, l'effet Raman provoque un décalage en gain ou inclinaison (en anglais "tilt") du spectre après transmission. En d'autres termes, un spectre présentant une pluralité de canaux de puissance sensiblement identique en début de propagation présente après propagation du fait de l'effet Raman des puissances plus faibles pour les canaux de longueur d'onde les plus faibles. Une solution connue à ce problème consiste à adapter le gain des amplificateurs utilisés. Cette solution est néanmoins limitée dans la plage de correction possible.

N. Zirngibl, Analytical model of Raman gain effects in massive wavelength division multiplexed transmission systems, Electronics Letters, vol. 34 n°14 (1998), pp. 789-790 propose un modèle des effets de la diaphonie Raman, montrant que la distorsion spectrale induite par la diaphonie par effet Raman stimulé ne dépend que de la puissance totale injectée, et non pas de la distribution spectrale de cette puissance. Dans cet article, la distorsion est modélisée par un "tilt" ou inclinaison parfait, et il est prévu une compensation par un filtre linéaire présentant une inclinaison constante en dB/nm.

L'inclinaison du spectre est par exemple décrite dans S. Bigo et autres, Investigation of stimulated Raman scattering on WDM structures over various types of fiber infrastructures, OFC'99 paper WJ7, 21-26 février 1999. Ce document mesure les effets de la diaphonie Raman, dans la plage de longueur d'onde située autour de 1 550 nm, mais ne propose pas de solution au problème.

D. N. Christodoulides et R. B. Jander, Evolution of Stimulated Raman Crosstalk in Wavelength Division Multiplex Systems, IEEE Photonics Technology Letter, vol. 8 n°12, Décembre 1996, pp. 1722-1724 propose une simulation numérique de la diaphonie provoquée par l'effet Raman entre les différents canaux d'un système de transmission en multiplexage en longueur d'onde. Ce document utilise une approximation triangulaire du profil de gain Raman sur le multiplex.

A. R. Chraplyvy, Optical power limits in multi-channel wavelength division multiplexed systems due to Stimulated Raman Scattering, Electronics Letters, vol. 20 n°2 (1984), pp. 58-59 propose aussi une approximation triangulaire du gain Raman dans un système de transmission à multiplexage en longueur d'onde; il est précisé que les modèles fournis dans ce document peuvent être utilisés pour estimer les limitations induites par la diaphonie due à l'effet Raman stimulé. Ce document ne propose pas de solution aux problèmes que soulève cette amplification.

Une onde lumineuse cohérente unique émise dans une fibre monomode subit des pertes liées à la génération spontanée d'une seconde onde, puis à son amplification, par effet Raman. La fréquence de l'onde résultante est réduite d'environ 13 THz par rapport à l'onde initiale. T. Sylvestre et autres, Stimulated Raman suppression under dual-frequency pumping in single mode fibers, Electronics Letters, vol. 34 n°14 (1998), pp. 1417-1418 décrit un montage expérimental permettant de limiter fortement ces pertes pour l'onde d'intérêt en éliminant l'onde résultante. Pour cela, une onde dont la fréquence est réduite d'environ 2x13 THz par rapport à l'onde d'intérêt est également émise dans la fibre, et une fibre à maintien de polarisation est considérée. Cette méthode de réduction de l'effet Raman n'est pas applicable à un système de transmission à large ou à très large bande.

La demande de brevet français déposée le 10 juin 1999 sous le numéro 99 07324 et intitulée "Compensation de l'effet Raman par pompage dans un système de transmission à multiplexage en longueur d'onde" propose d'injecter dans une liaison des pompes à des longueurs d'onde inférieures à celles des signaux d'un multiplex en longueur d'onde, pour compenser l'inclinaison provoquée par l'effet Raman sur les canaux du multiplex. L'apport d'énergie provenant des pompes compense la déplétion des premiers canaux du multiplex. Cette solution est proposée pour des signaux à des longueurs d'ondes entre 1520 et 1600 nm, soit donc sur des bandes généralement inférieures à 80-100 nm, et au plus égales à 20 THz.

Tous ces documents de l'état due la technique, comme par ailleurs la demande dé brevet français citée en dernier, ne concernent que la plage de transmission centrée autour de 1550 nm, c'est-à-dire les longueurs d'ondes entre 1520 et 1600 nm.

Kenneth L. Walker, Status and challenge of optical amplifiers and lasers, OAA'98, MB1, pp. 12-14, mentionne comme évolution future l'utilisation de l'ensemble de la largeur spectrale disponible dans les fibres optiques, soit des largeurs de 400 nm ou plus entre 1,2 et 1,7 µm. Ce document précise que les deux facteur principaux qui limitent l'utilisation de l'ensemble du spectre d'une fibres sont la dispersion est l'atténuation, Il précise encore que l'amplificatton Raman constitue un bon candidat pour l'amplification sur une large bande, à inverse des amplificateurs dopés aux terres rares, qui ne fonctionnent que sur une largeur de bande de moins de 100 µm. Pour assurer la platitude du gain, cet article propose d'utiliser comme filtre des réseaux à longue période; les exemples proposés montrent des filtres entre 1500 et 1600 nm, et le gain résultant, sur une largeur de 40 nm. L'invention propose une solution au problème nouveau des distorsion provoquée par l'effet Raman, sur de très larges bandes. On entend dans la suite de la demanda par "très large bande" des plages de longueurs d'onde s'étendant sur plus de 150 nm, on sur plus dé 200 nm, soit sur plus de 20 THz ou sur plus de 30

THz.

Elle repose sur la constatation que l'effet Raman, sur de telles largeurs de bande, génère des distorsions par diaphonie entre les différents canaux. Ces distorsions induisent des modifications de la distribution spectrale d'énergie sensiblement différentes de celles déjà connue dans le cas de transmissions en bande étroite et mentionnés ci-dessus. Ces modifications nouvelles de la distribution spectrale doivent être corrigées pour permettre une transmission.

L'invention propose une solution à ce problème nouveau.

Plus précisément, l'invention propose un système de transmission à multiplexage en longueur d'onde comprenant des moyens de compensation des transferts d'énergie entre les canaux provoqués par l'effet Raman. Selon l'invention, Le système se caractérise par des moyens qui compensent un appauvrissement des canaux sur une première zone qui s'étend au début de la très large bande, sur une largeur comprise entre 13 et 21 THz, et qui compensent un enrichissement des canaux sur une troisième zone qui s'étend à la fin de la très large bande, sur une largeur comprise entre 13 et 21 THz, de manière à laisser une deuxième zone sans compensation entre la première et la troisième zone.

Le système peut présenter une largeur de bande supérieure à 30 THz.

Dans un mode de réalisation, la bande s'étend au-delà de 1620 nm, de préférence au-delà de 1650 nm, ou de façon encore plus préférée au-delà de 1670 nm.

Avantageusement, les moyens de compensation compensent un appauvrissement des canaux sur le début de la bande, par exempte sur une largeur comprise entre 13 et 21 THz.

Les moyens de compensation peuvent aussi compenser un enrichissement des canaux sur la fin de la bande, par exemple sur une largeur comprise entre 13 et 21 THz. Dans un mode de réalisation, les moyens de compensation compensent un enrichissement des canaux sur la fin de la bande par les pertes linéaires dans la fibre du système de transmission. Les moyens de compensation peuvent aussi comprendre des moyens pour émettre des puissances plus faibles sur la fin de la bande.

L'invention concerne aussi un système d'amplification optique très large bande comprenant des moyens de compensation des transferts d'énergie provoqués par l'effet Raman. La largeur de bande est de préférence supérieure à 20 THz, voire supérieure à 30 THz.

Avantageusement, les moyens de compensation compensent un appauvrissement des canaux sur le début de la bande, par exemple sur une largeur comprise entre 13 et 21 THz. On peut à cette fin prévoir des moyens d'amplification distribuée sur le début de la bande. Ces moyens comprennent par exemple des moyens d'amplification Raman et/ou des moyens d'amplification par des terres rares.

Dans un mode de réalisation, les moyens de compensation compensent un enrichissement des canaux sur la fin de la bande, par exemple sur une largeur comprise entre 13 et 21 THz.

D'autres caractéristiques et avantagés de l'invention apparaîtront à la lecture de la description qui suit de modes de réalisation de l'invention, donnée à titre d'exemple et en référence aux dessins annexés, qui montrent
- figure 1, une représentation schématique des modifications de la distribution spectrale provoquées par l'effet Raman dans un système de transmission très large bande;
- figure 2, une représentation schématique de l'allure du gain pour une amplification dans un système de transmission très large bande.

L'invention repose sur la constatation que les distorsions provoquées par l'effet Raman dans les systèmes à très large bande sont différentes des effets provoqués par ce même effet Raman dans les systèmes de transmission à multiplexage en longueur d'onde classique. De fait, l'allure des distorsions obtenues est radicalement différente - voir par exemple l'article de S. Bigo et autres, qui ne mentionne qu'une inclinaison, en d'autres termes un effet qui peut être approximé par une droite de pente croissante.

En outre, les solutions, par exemple la présence de pompes à des longueurs d'onde inférieures à celles du multiplex, proposée dans la demande de brevet précitée, ne permettent une compensation que sur quelques dizaines de nanomètres, et au maximum sur 20 THz.

L'invention propose donc une compensation générique des effets du gain Raman sur des systèmes de transmission à très large bande.

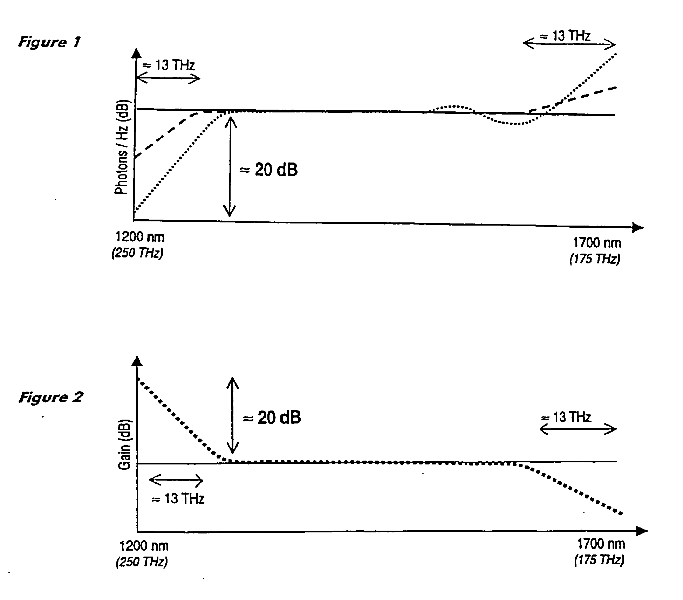

La figure 1 montre une représentation schématique des modifications de la distribution spectrale provoquées par l'effet Raman dans un système de transmission très large bande. En abscisse sont portées les longueurs d'onde en nanomètres ou en THz. En ordonnée est portée la puissance en dB. On a représenté sur la figure les modifications induites par l'effet Raman sur des canaux d'un multiplex s'étendant entre 1200 et 1700 nm. Le trait gras sur la figure montre la distribution de puissance constante sur les différents canaux du multiplex, qui est l'objectif visé; les traits en pointillés montrent qualitativement l'allure des modifications induites sur cette distribution théorique par l'effet Raman. On constate qu'existent essentiellement trois zones dans le schéma de la figure 1. La première zone s'étend au début de la bande disponible, à partir de 1200 nm ou 250 THz, et sur une plage de longueurs d'onde de l'ordre de 13 THz ou environ 85 nm, et plus généralement une plage d'une largeur entre 13 et 21 THz. Dans cette première zone, les canaux du multiplex subissent une déplétion ou appauvrissement par effet Raman, au profit des canaux présentant une longueur d'onde plus importante. Ils présentent donc une puissance plus faible que la puissance nominale. Les courbes en pointillé sont donc en dessous de la courbe en trait gras. La déplétion peut provoquer des variations de puissance allant jusqu'à 20 dB ou plus par rapport à la puissance nominale des canaux.

La troisième zone s'étend sur la fin de la bande disponible, dans l'exemple jusqu'à une limite supérieure de 1700 nm; elle couvre une plage de longueurs d'onde d'environ 13 THz ou 85 nm, et plus généralement une plage d'une largeur entre 13 et 21 THz, soit environ 70 à 120 nm. Dans cette troisième zone, les canaux d'un multiplex sont replétés ou enrichis par les canaux précédents, et présentent donc une puissance supérieure à la puissance nominale attendue. La différence de puissance par rapport à la puissance nominale peut atteindre jusqu'à 20 dB ou plus.

La deuxième zone s'étend entre les première et troisième zones. Dans cette deuxième zone, les signaux des canaux du multiplex sont replétés ou enrichis par le transfert d'énergie par effet Raman provenant des canaux précédents. Les canaux du multiplex sont aussi appauvris par le transfert d'énergie par effet Raman vers les canaux suivants. En prenant en compte ces deux facteurs, la puissance dans les canaux de la deuxième zone est moins affectée par l'effet Raman. Ceci reste vrai tant que l'on ne rentre pas dans un régime tellement déséquilibré que l'on voit apparaître des oscillations sur la distribution spectrale de puissance ; un tel régime est peu probable dans un système présentant la compensation proposée dans les première et troisième zones, particulièrement si ces moyens de compensation comprennent une amplification distribuée aux plus faibles longueurs d'onde ou une perte distribuée aux longueurs d'onde les plus élevées, et encore plus particulièrement si il comprennent l'un et l'autre de ces deux moyens de compensation.

Les deux graphes en pointillés sur la figure 1 représentent des approximations différentes des distorsions induites par l'effet Raman; ces distorsions sont notamment fonction de la puissance totale injectée, de la largeur de bande, de l'atténuation, de la surface effective, de la composition et de la longueur de la fibre.

On constate, comme indiqué plus haut, que les distorsions induites par l'effet Raman sur une très large bande sont sensiblement différentes de la simple inclinaison mentionnée dans l'article précité de S. Bigo et autres. La figure 1 montre l'exemple d'une plage de longueurs d'onde de 500 nm; il est clair que l'on retrouve une courbe d'une allure similaire, pour des plages plus réduites, par exemple autour de 250 ou 300 nm. L'utilisation de deux bandes distinctes, séparées, comme par exemple une bande autour de 1,3 µm et une bande autour de 1,55 µm ne conduit pas à des distorsions du type de celles qui sont représentées sur la figure 1, mais simplement à des distorsions du genre de celles qualifiées dans l'état de la technique. Si l'on ajoute des canaux entre 1,3 µm et 1,55 µm, et par exemple des canaux entre 1,4 µm et 1,5 µm, ou entre 1,6 µm et 1,7 µm, on retrouve des distorsions présentant l'allure de la figure 1. Ceci provient du fait qu'une séparation des bandes supérieure à environ 20 THz élimine l'incidence de l'effet Raman; cet effet est maximal entre des bandes séparées d'environ 13 THz.

L'invention repose sur la constatation que ces distorsions sont distinctes des distorsions décrites dans les articles de l'état de la technique; elle propose de compenser ces distorsions, de sorte à permettre une transmission. La figure 2 montre une représentation schématique de l'allure du gain pour une amplification dans un système de transmission très large bande; en abscisse est portée la longueur d'onde entre 1200 nm et 1700 nm (de 250 à 175 THz), et en ordonnées le gain proposé. Le trait continu représente l'amplification moyenne, qui correspond à l'amplification dans la deuxième zone identifiée plus haut; cette amplification est celle qui serait requise en l'absence de transferts d'énergie par effet Raman. Le trait en pointillés représente l'allure du gain d'amplification proposé selon l'invention, pour compenser les distorsions provoquées par l'effet Raman.

Comme le montre la figure, dans la première zone définie plus haut, le gain est supérieur au gain moyen, et décroît de façon sensiblement linéaire; la valeur initiale est d'environ 20 dB supérieure au gain moyen, et la valeur décroît progressivement jusqu'à atteindre le gain moyen, après environ 13 THz à 21 THz. Le gain compense ainsi la déplétion des canaux dans la première zone. Dans cette zone, l'invention propose donc d'utiliser des amplificateurs présentant des gains beaucoup plus importants que le gain moyen. La pente de ces amplificateurs est donnée sur la figure 2, et elle peut atteindre 20 dB sur 80 nm, soit près de 0,25 dB/nm.

On peut avantageusement dans cette première zone utiliser pour la compensation du gain des amplificateurs distribués, et par exemple des amplificateurs Raman. Ce mode de réalisation détend les contraintes à imposer à des amplificateurs discrets pour atteindre les valeurs d'amplification proposées ; en outre, l'utilisation d'amplificateurs distribués dans cette première zone permet de limiter les puissances utilisées, notamment par rapport à une solution avec des amplificateurs discrets. Une telle limitation des puissances injectées diminue les distorsions induites par l'effet Raman.

Dans la troisième zone définie plus haut, le gain est inférieur au gain moyen; il décroît aussi sensiblement linéairement. La baisse de gain compense ainsi l'enrichissement des canaux de la troisième zone. Cet enrichissement, comme représenté à la figure 1 en traits pointillés, peut provoquer des oscillations, et résulter en une consommation d'énergie excessive. L'invention propose d'imposer des conditions sur les longueurs d'ondes les plus importantes, qui permettent d'éviter l'enrichissement, et de limiter les oscillations. Elle propose, suivant un premier mode de réalisation, d'utiliser dans cette troisième zone des puissances qui sont plus faibles que dans le reste de la bande, et qui demandent moins d'amplification ; ceci diminue encore les contraintes sur les amplificateurs discrets ou distribués efficaces dans cette zone. Une autre solution, qui n'est pas exclusive de la première consiste à étendre la fenêtre de transmission jusqu'à des longueurs d'onde au-delà de 1620, voire 1650 ou même 1670 nm, et à utiliser les pertes linéaires croissantes de la fibre de transmission pour compenser les distorsions induites par l'effet Raman. Cette solution permettrait notamment d'utiliser les fibres optiques existantes pour des transmissions dans des plages de longueurs d'onde iusqu'ici réputées inutilisables, et par exemple, pour des fibres G.652 classiques, pour des longueurs d'onde allant jusqu'à 1650, 1680 ou même 1700 nm, ou au-delà. On pourrait encore utiliser dans cette troisième zone des atténuateurs.

Dans la seconde zone, les variations de gain nécessaires sont faibles et le gain est sensiblement égal au gain moyen. On peut dans cette zone utiliser des amplificateurs présentant un gain sensiblement plat, du genre des amplificateurs habituellement utilisés dans les systèmes de transmission à bande étroite.

L'invention permet de la sorte de compenser les distorsions induites par l'effet Raman sur les canaux d'un système de transmission à très large bande.

L'invention propose aussi d'autres solutions, qui combinées à la compensation décrite ci-dessus, peuvent permettre de limiter les distorsions provoquées par l'effet Roman. Dans un mode de réalisation, l'invention propose d'utiliser dans le système de transmission des puissances faibles, de sorte à limiter les transferts d'énergie par effet Raman. La puissance par canal optimale dans un système à multiplexage en longueur d'onde très large bande avec diaphonie Raman, particulièrement si elle n'est pas compensée par d'autres moyens, est inférieure à la puissance optimale dont on conviendrait en l'absence du phénomène (transmission sur une bande réduite) puisque c'est un effet non-linéaire - les transferts d'énergie d'un canal vers un autre étant proportionnels au produit des puissances des deux canaux. L'utilisation d'amplification distribuée en bas de bande sert entre autre à limiter la puissance. De fait, comme le montre pour de plus faibles largeurs de bande l'article de N. Zirngibl cité plus haut, la diaphonie par effet Raman dépend de la puissance totale injectée dans la fibre. Une puissance plus faible peut permettre de limiter les distorsions provoquées par l'effet Raman.

On peut encore procéder à une gestion du système de transmission lorsque le trafic est faible, c'est-à-dire inférieur au trafic maximal acceptable par le système de transmission. La coupure de canaux inutilisés du fait d'un faible débit utile conduirait à modifier substantiellement les effets du gain Raman ; même si elle reste possible, ce n'est pas la solution préférée, et l'invention propose plutôt de continuer à émettre sur les canaux peu utilisés, éventuellement avec des débits plus faibles, et en utilisant bien sûr des signaux décorrelés sur les différents canaux. Cette solution impliquant des signaux de charge a pour avantage de conserver la charge des amplificateurs optiques et la forme des distorsions à compenser.

L'invention a donc aussi pour objet un système d'amplification ou un amplificateur optique très large bande pour compenser les distorsions induites par l'effet Raman. Le système d'amplification peut comporter un amplificateur, ou une combinaison d'amplificateurs présentant individuellement des largeurs de bande plus réduites, Dans les faibles longueurs d'onde, le système d'amplification peut présenter des moyens d'amplification avec un gain supérieur au gain moyen; il peut notamment présenter des moyens d'amplification distribuée ; dans les fortes longueurs d'onde, le système d'amplification peut présenter des moyens d'amplification avec un gain inférieur au gain moyen.

Il est clair que les moyens de compensation décrits dans ce qui précède peuvent compenser totalement les transferts d'énergie par effet Raman ou peuvent ne compenser que partiellement ces transferts d'énergie. Notamment, une compensation totale sur tous les canaux n'est forcément nécessaire dans tous les systèmes de transmission. L'invention ne s'applique donc pas seulement au cas d'une compensation totale sur tous la bande considérée.

Bien entendu, la présente invention n'est pas limitée aux exemples et modes de réalisation décrits et représentés, mais elle est susceptible de nombreuses variantes accessibles à l'homme de l'art. Les plages de longueurs d'onde proposées dans les figures ne sont données qu'à titre d'exemple, et l'invention s'applique pour tous les systèmes de transmission à très large bande. Les moyens d'amplification peuvent comprendre des amplificateurs discrets ou distribués, en un nombre qui peut varier selon les applications. Dans le cas d'une amplification distribuée de type Raman, l'amplification Raman peut être co- ou contra-directionnelle, ou les deux à la fois. Autrement dit, les faisceaux de pompe peuvent être injectés dans la direction de propagation des signaux, ou dans la direction opposée, ou simultanément dans les deux directions. Une amplification co-directionnelle est plus efficace qu'une amplification contra-directionnelle vis à vis de la réduction de l'effet de la diaphonie Raman ; elle présente toutefois d'autres inconvénients, et de ce fait, il est généralement admis hors du contexte de l'invention qu'un schéma d'amplification contra-directionnel est préférable dans le cas d'amplification Raman distribuée.

Dans les modes de réalisation décrits plus haut, l'amplification distribuée est une amplification Raman. L'amplification n'est pas nécessairement intégralement une amplification Raman, et pourrait aussi être totalement ou en partie une amplification distribuée ou discrète par des terres rares. L'amplification Raman est néanmoins le mode d'amplification privilégié ici pour la première zone mentionnée ci-dessus car il permet de réaliser une inclinaison ou "tilt" moyen, d'ajuster sa pente et sa forme et de le réaliser dans n'importe quelle gamme de longueurs d'onde, par un bon choix des longueurs d'onde de pompe. Au contraire, il est plus difficile d'adapter ces différents paramètres pour une amplification par des terres rares. On peut en tout état de cause utiliser une amplification Raman, une amplification par des terres rares ou toute combinaison des deux dans chacune des zones définies plus haut. Ces amplifications peuvent être discrètes (localisées) ou être distribuées, ou bien encore combiner ces deux modes.

Dans les exemples donnés plus haut, on a considéré une transmission sur une plage de longueurs d'onde de 500 nm; l'invention s'applique aussi pour des plages de longueurs d'onde plus réduites, par exemple pour des plages de l'ordre de 150 nm, soit environ 20 THZ autour de 1550 nm. Pour de telles plages de longueurs d'onde, les solutions proposées dans l'art antérieur ne permettent pas une compensation totale ou partielle du gain Raman sur toute la largeur de la bande considérée.

Dans les modes de réalisation décrits, on a appliqué à un système de transmission à très large bande une compensation des effets du gain Raman, à la fois dans le bas de la bande avec une amplification et dans le haut de la bande avec une atténuation; cette solution s'applique aussi pour des systèmes qui ne sont pas à très large bande, par exemple pour des systèmes d'une largeur de bande en dessous de 20 THz. Dans ce cas, cette double compensation permet une meilleure égalisation, et permet aussi de limiter les puissances utilisées pour les pompes des faibles longueurs d'onde. Par rapport à une solution d'atténuation sur toute la largeur de bande, cette double compensation limite la perte totale dans les canaux présentant la plus faible longueur d'onde.

## Revendications

1. Système de transmission à multiplexage en longueur d'onde comprenant des moyens de compensation des transferts d'énergie entre les canaux provoqués par l'effet Raman, **caractérisé par le fait que** les moyens compensant un appauvrissement des canaux sur une première zone qui s'étend au début de la très lorgne bande, sur une largeur comprise entre 13 et 21 THz, et compensent un enrichissement des canaux sur une troisième zone qui s'étend à la fin de la très large bande, sur une largeur comprise entre 13 et 21 THz, de manière à laisser une deuxième zone sans compensation entre la première et la troisième zone.

2. Système selon la revendication 1, dans lequel ladite bande s'étend au-delà de 1620 nm.

3. Système selon l'une des revendications 1 à 3, dans lequel les moyens de compensation compensent un enrichissement des canaux sur la fin la bande par les pertes linéaires dans la fibre du système de transmission.

4. Système selon l'une des revendications 1 à 4, dans lequel les moyens de compensation comprennent des moyens pour émettre des puissances plus faibles sur la fin la bande.

5. d'amplification optique comprenant de moyens de compensation des transferts d'énergie provoqués par l'effet Roman, **caractérisé par le fait que** les moyens compensant un appauvrissement des canaux sur une première zone qui s'étend au début de la très large bande, sur une largeur comprise entre 13 et 21 THz, et compensent un enrichissement des canaux sur une troisième zone qui s'étend à la fin de la très large bande, sur une largeur comprise entre 13 et 21 THz, de manière à laisser une deuxième zone sans compensation entre la première et la troisième zone.

6. Système selon l'une des revendications 6 et 7, comprenant des moyens d'amplification distribuée sur le début de la bonde.

7. Système selon la revendication 8, dans lequel les moyens d'amplification distribuée comprennent des moyens d'amplification Roman.

8. systèmes selon l'une des revendications 8 et 9, dans lequel les moyens d'amplification distribuée comprennent des moyens d'amplification par des terres rares.

## Claims

1. A wavelength division multiplexing transmission system comprising means for compensating for energy transfers between channels caused by Raman scattering, **characterized by** the fact that the means compensate for a depletion of the channels over a first zone which extends at the start of a very wide band, over a width between 13 and 21 THz, and compensate for an enrichment of the channels over a third zone which extends at the end of the very wide band, over a width between 13 and 21 THz, so as to leave a second area without compensation between the first and third zones.

2. A system according to claim 1, wherein said band extends past 1620 nm.

3. A system according to one of claims 1 to 2, wherein the compensation means compensate for an enrichment of the channels at the end of the band by way of linear losses within the transmission system's fiber.

4. A system according to one of claims 1 to 3, wherein the compensation means comprise means for sending lower powers at the end of the band.

5. An optical amplification system comprising means for compensating for energy transfers between channels caused by Raman scattering **characterized by** the fact that the means compensate for a depletion of the channels over a first zone which extends at the start of a very wide band, over a width between 13 and 21 THz, and compensate for an enrichment of the channels over a third zone which extends at the end of the very wide band, over a width between 13 and 21 THz, so as to leave a second area without compensation between the first and third zones.

6. A system according to claim 5, comprising distributed amplification means at the start of the band.

7. A system according to claim 6, wherein the distributed amplification means comprise Raman amplification means.

8. A system according to one of claims 6 and 7, wherein the distributed amplification means comprise rare-earth amplification means.

## Patentansprüche

1. Übertragungssystem mit Wellenlängen-Multiplex, umfassend Mittel zum Kompensieren der durch den Raman-Effekt zwischen den Kanälen verursachen Energieübertragungen, **dadurch gekennzeichnet, dass** die Mittel eine Verarmung der Kanäle in einer ersten Zone, welche sich am Anfang eines sehr breiten Bandes erstreckt, in einer Bereite zwischen 13 und 21 THz kompensieren, und eine Anreicherung der Kanäle in einer dritten Zone, welche sich am Ende des sehr breiten Bandes erstreckt, in einer Breite zwischen 13 und 21 THz kompensieren, so dass zwischen der ersten und der dritten Zone eine zweite Zone ohne Kompensation erhalten bleibt.

2. System nach Anspruch 1, wobei sich das besagte Band über 1620 nm hinaus erstreckt.

3. System nach einem der Ansprüche 1 bis 2, wobei die Kompensserungsmittel eine Anreicherung der Kanäle am Ende des Bandes durch die linearen Verluste in der Faser des Übertragungssystems kompensieren.

4. System nach einem der Ansprüche 1 bis 3, wobei die Koimpensierungsmittel Mittel zum Aussendet von schwächeren Leistungen am Ende des Bandes umfassen.

5. Optisches Verstärkersystem mit Mitteln zum Kompensieren der durch den Raman-Effekt verursachten Energieübertragungen, **dadurch gekennzeichnet, dass** die Mittel eine Verarmung der Kanäle in einer ersten Zone, welche sich arm Anfang eines sehr breiten Bandes erstreckt, in einer Breite zwischen 13 und 21 THz kompensieren, und eine Anreicherung der kanäle in einer dritten Zone, welche sich arm Ende des sehr breiten Bandes erstreckt, in einer Breite zwischen 13 und 21 THz kompensieren, so dass zwischen der ersten und der dritten Zone eine zweite Zone ohne Kompensation erhalten bleibt.

6. System nach Anspruch 5, umfassend Verstärkermittel, welche am Anfang des Bandes verteilt werden.

7. System nach Anspruch 6, wobei die verteilten Verstärkermittel Raman-Verstärkermittel umfassen.

8. System nach einem der Ansprüche 6 und 7, wobei die verteilten Verstärkermittel Seltene Erden-Verstärkermittel umfassen.
